(19) **Europäisches Patentamt European Patent Office Office européen des brevets**

(11) **EP 3 018 625 B1**

(12) **FASCICULE DE BREVET EUROPEEN**

(45) Date de publication et mention de la délivrance du brevet:
**26.12.2018 Bulletin 2018/52**

(51) Int Cl.:
***G06T 7/00*** (2017.01)

(21) Numéro de dépôt: **15186507.8**

(22) Date de dépôt: **23.09.2015**

(54) **PROCÉDÉ DE CALIBRATION D'UN SYSTÈME DE VISÉE**

KALIBRIERUNGSVERFAHREN EINES ZIELSYSTEMS

METHOD FOR CALIBRATING A SIGHT SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.11.2014 FR 1460691**

(43) Date de publication de la demande:
**11.05.2016 Bulletin 2016/19**

(73) Titulaire: **Morpho**
**92130 Issy-les-Moulineaux (FR)**

(72) Inventeurs:
• **MALRAT, Benoît**
**92130 ISSY LES MOULINEAUX (FR)**
• **BEAUDET, Jean**
**92130 ISSY LES MOULINEAUX (FR)**

(74) Mandataire: **Regimbeau**
**20, rue de Chazelles**
**75847 Paris Cedex 17 (FR)**

(56) Documents cités:
**US-A1- 2007 035 627    US-A1- 2010 289 869**

• **WOOD S N: "Thin plate regression splines", JOURNAL OF THE ROYAL STATISTICAL SOCIETY - SERIES B: STATISTICAL METHODOLOGY, BLACKWELL PUBLISHING, vol. 65, no. 1, 28 January 2003 (2003-01-28), pages 95-114, XP002518497, ISSN: 1369-7412, DOI: 10.1111/1467-9868.00374**

EP 3 018 625 B1

**Description**

DOMAINE DE L'INVENTION

L'invention concerne un procédé de calibration d'un système de visée pour viser un objet au moyen d'un viseur, la position de l'objet étant repérée dans un référentiel externe au viseur, et un système mettant en oeuvre ledit procédé.
L'invention trouve application en particulier dans le domaine de l'acquisition d'images à haute résolution en une position précise, comme l'acquisition d'images de traits biométriques d'individus.

ETAT DE LA TECHNIQUE

La calibration d'un système de visée est la détermination d'une loi de commande à appliquer à un viseur pour permettre, à partir d'une position d'un objet dans un référentiel externe au viseur, d'orienter ledit viseur de façon à viser l'objet.
Un exemple d'application est un système d'acquisition d'images de traits biométriques d'individus, comme par exemple des images d'iris. Afin d'acquérir des images de haute résolution de l'iris d'un individu, le système nécessite une caméra haute-résolution. Du fait de cette résolution importante, cette caméra ne peut être à large champ fixe, mais doit être mobile afin de pouvoir viser un iris d'un individu.
Le système comprend donc également deux caméras de plus faible résolution, mais à grand champ, et fixes, qui peuvent détecter la position d'un iris d'un individu.
La position de l'iris dans le référentiel des caméras de grand champ doit être exploitée par la caméra haute-résolution pour viser l'iris et ensuite procéder à son acquisition.
Dans ce type de système, la détermination de la loi de commande de la caméra de visée (dans l'exemple qui précède : la caméra haute-résolution) a été réalisée à partir d'un modèle cinématique a priori du système comprenant l'ensemble des caméras.
Ce modèle permet d'estimer les positions relatives des différentes caméras du système, et en fonction de ces positions, la position de l'objet dans le référentiel de la caméra de visée, puis les commandes à appliquer à cette caméra pour viser l'objet.
Cependant cette approche présente de nombreux problèmes. Tout d'abord la détermination d'un modèle cinématique doit être mise en oeuvre pour chaque nouveau système de visée, puisque le modèle dépend des positions relatives entre les différents composants du système. Or ce processus de détermination du modèle cinématique est long et complexe.
De plus, cette approche peut nécessiter, afin de simplifier le modèle cinématique, de simplifier la conception du système de visée, ce qui peut s'avérer contraignant.
Enfin, cette approche est très contraignante au niveau de la précision mécanique lors de la fabrication du système de visée afin d'assurer la pertinence du modèle cinématique une fois le système de visée assemblé.
Des erreurs de précision peuvent apparaître si le système de visée n'a pas été assemblé avec la précision requise et si des écarts existent entre le modèle a priori et le système réel.
Une autre solution a été proposée dans l'article de Junejo, I.N, et Foroosh, H, Optimizing PTZ camera calibration from two images, Machine Vision and Applications, 23(2), 375-389 ; 2012.
Néanmoins cette méthode requiert d'acquérir deux images avec un recouvrement des vues, donc pour une grande focale, avec une petite différence angulaire entre les prises de vues, ce qui est contraignant et défavorable à la précision.
Le document US 2010/0289869 décrit un autre type de calibration d'une caméra, comprenant la détermination de paramètres intrinsèques et extrinsèques d'une caméra, les paramètres extrinsèques incluant notamment les angles de visée de la caméra par rapport à un point, à partir des commandes de la caméra pour viser le point.
Ce document ne permet pas d'établir une loi de commande à appliquer à la caméra pour atteindre ces angles de visée. De plus, ce document ne peut pas s'appliquer dans le cas de l'acquisition d'images d'iris car la longue distance focale utilisée à cette fin empêche de déterminer avec précision les paramètres intrinsèques et extrinsèques de la caméra.

PRESENTATION DE L'INVENTION

L'invention a pour but de proposer une méthode de calibration d'un système de visée simple et rapide à mettre en oeuvre, et moins contraignante sur la conception et la fabrication du système de visée.
L'invention a également pour but de proposer une méthode de calibration universelle, c'est-à-dire ne dépendant pas de la composition ou la structure du système de visée.
A cet égard, l'invention a pour objet un procédé de calibration d'un système de visée comprenant un viseur et une optique de détection de la position d'un objet dans l'espace, caractérisé en ce qu'il comprend la détermination d'une loi de commande à appliquer au viseur pour viser l'objet en fonction de sa position, ladite position étant déterminée dans un référentiel de l'optique de détection et la loi de commande comprenant deux commandes angulaires et une commande de mise au point du viseur, exprimées en fonction des positions relatives entre l'objet à viser et un point concourant de toutes les lignes de visée du viseur,

le procédé comprenant les étapes consistant à :

- viser, avec le viseur des objets se trouvant à au moins six positions différentes connues dans le référentiel du système de visée et relever les commandes correspondantes,
- à partir des positions de l'objet et des commandes correspondantes, déterminer la position du point concourant des lignes de visées et la loi de commande par la minimisation d'une fonction de la dérivée seconde de la loi de commande.

Avantageusement, mais facultativement, le procédé selon l'invention peut en outre comprendre au moins l'une des caractéristiques suivantes :

- l'étape de détermination de la position du point concourant et de la loi de commande comprend la mise en oeuvre des étapes consistant à :

   ◦ déterminer une position du point concourant correspondant à des commandes minimisant la fonction de la dérivée seconde de la loi de commande, et
   ◦ une fois la position du point concourant déterminée, déterminer les commandes minimisant la fonction de la dérivée seconde de la loi de commande.

- l'étape de détermination de la position du point concourant comprend la minimisation, en fonction de ladite position, de l'intégrale de la somme des dérivées secondes des commandes angulaires.
- l'étape de détermination de la position du point concourant comprend la minimisation, en fonction de ladite position, de l'intégrale de la somme des dérivées secondes des positions angulaires relatives entre le point à viser et le point concourant exprimées en fonction des commandes angulaires du viseur.
- chaque commande angulaire est une fonction de deux angles de type spline de plaque mince.
- chaque commande angulaire est une fonction de deux angles du type spline de plaque mince régularisée.
- la détermination de la commande de mise au point est mise en oeuvre lors de la détermination des commandes angulaires ou postérieurement à la détermination des commandes angulaires et du point M.
- la détermination de la commande de mise au point comprend la minimisation de l'intégrale de la dérivée seconde de la commande de mise au point.
- la commande de mise au point est une fonction de type spline cubique.

L'invention concerne également un système de visée comprenant un viseur, une optique de détection d'une position d'un objet à viser, et une unité de traitement comportant des moyens de traitement, le système de visée étant caractérisé en ce qu'il est adapté pour mettre en oeuvre le procédé selon la description qui précède.

L'invention a enfin pour objet l'utilisation d'un tel système de visée comprenant les étapes consistant à :

- acquérir une position d'un objet à viser dans un référentiel de l'optique de détection,
- déduire des positions relatives entre l'objet et un point concourant des lignes de visée du viseur, des coordonnées de l'objet dans un référentiel sphérique centré sur le point concourant, et
- à partir de la loi de commande déterminée lors de la calibration, en déduire une commande à appliquer au viseur pour viser l'objet.

La méthode de calibration proposée présente l'avantage d'être une méthode automatique et de mise en oeuvre simple par n'importe quel système de visée.

Cette méthode ne nécessite pas d'élaborer un modèle cinématique a priori du système, ce qui permet de diminuer les contraintes de reproductibilité mécanique du système lors de la fabrication et de diminuer son coût. Les contraintes sur la conception du système pour simplifier le modèle cinématique sont également relâchées.

De plus la méthode proposée ne requiert pas de prises de vues présentant une zone de recouvrement.

DESCRIPTION DES FIGURES

D'autres caractéristiques, buts et avantages de la présente invention apparaîtront à la lecture de la description détaillée qui va suivre, au regard des figures annexées, données à titre d'exemples non limitatifs et sur lesquelles :

- La figure 1a représente un vue en deux dimensions schématique un système de visée,
- La figure 1b représente une vue en deux dimensions schématique d'un mode de réalisation alternatif du système de visée de la figure 1a.
- La figure 1c représente un exemple de référentiel pour la mesure des positions relatives d'un point à viser et d'un point concourant des lignes de visée du viseur du système de visée.
- Les figures 2a et 2b représentent schématiquement les principales étapes d'un procédé de calibration du système de visée selon deux modes de réalisation.
- La figure 3 représente schématiquement les étapes d'utilisation d'un système de visée calibrée selon le procédé de la figure 2a ou 2b.

DESCRIPTION DETAILLEE D'AU MOINS UN MODE DE REALISATION DE L'INVENTION

*Système de visée*

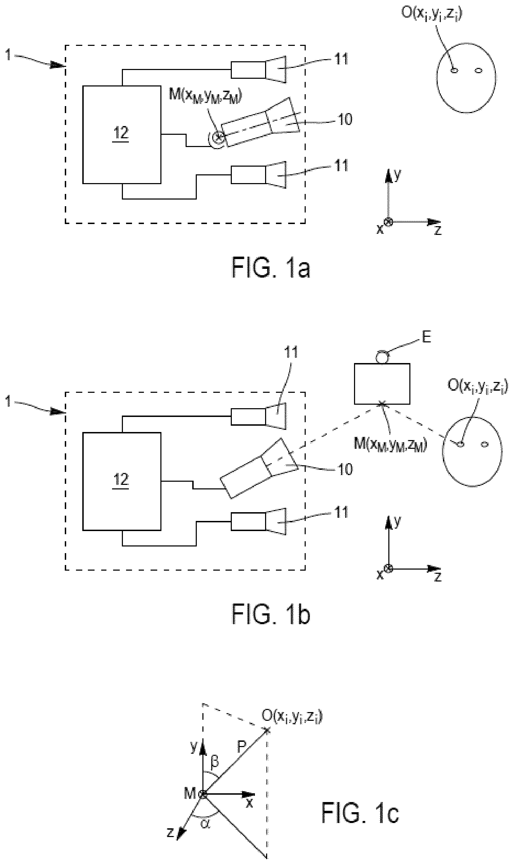

On a représenté en figure 1a un exemple de système de visée 1 pouvant être calibré selon le procédé décrit ci-après.

Ce système de visée 1 comprend au moins un viseur 10, pouvant être un dispositif d'acquisition d'images tel qu'une caméra. Le viseur 10 est mobile en rotation selon deux axes qui sont le lacet (yaw) et le tangage (pitch), la rotation du viseur selon ces deux axes étant actionnée par un moteur non représenté.

Le viseur 10 présente également une mise au point variable pour effectuer une mise au point sur une plage de profondeurs.

Le système de visée 1 comprend également une optique de détection 11 d'une position d'un objet O dans l'espace, par exemple sous forme de deux caméras. La position de l'objet O est repérée dans le référentiel de l'optique de détection 11, qui est un référentiel différent de celui du viseur 10. Ce référentiel est fixé arbitrairement, et peut le cas échéant être orthonormé.

On note $(x_i, y_i, z_i)$ les coordonnées de l'objet O dans le référentiel de l'optique de détection.

On a représenté sur les figures 1a et 1b un exemple non limitatif de référentiel. En l'espèce ce référentiel est orthogonal, présente un axe z correspondant à un axe longitudinal de visée de l'optique de détection 11 et un axe x correspondant à l'horizontale de l'image obtenue par cette optique de détection. Ce référentiel est celui qui est utilisé dans la suite.

Enfin le système de visée comprend une unité de traitement 12, par exemple un circuit intégré, comprenant des moyens de traitement adaptés pour piloter la rotation et la mise au point du viseur 10 par une loi de commande à partir de la position de l'objet détecté par l'optique de détection 11.

Sur la figure 1b, un mode de réalisation alternatif du système de visée est représenté, comprenant un miroir 13 monté entre l'objet O à viser et le système de visée, le miroir étant mobile en rotation selon deux axes. Le viseur 10 est dans ce cas fixe et vise le miroir 13, et la rotation du miroir permet de déplacer la ligne du visée du viseur 10 pour viser l'objet O.

Dans la suite, on fait l'hypothèse que dans les deux cas il existe un point concourant M de toutes les lignes de visée du viseur 10. Ce point M correspond à l'intersection entre le miroir 13 et la ligne de visée du viseur 10 s'étendant entre le viseur et le miroir 13 dans le cas de la figure 1b.

Sur la figure 1a, en considérant que le viseur 10 est monté selon une rotule parfaite dont le centre de rotation est sur l'axe optique, le point M correspond au centre de rotation.

Dans la suite, on exploite les positions relatives de l'objet O et du point M, pour en déduire la loi de commande du viseur 10.

En particulier, les positions de l'objet O et du point M étant relevées dans le référentiel de l'optique de détection 11, on peut convertir les coordonnées de l'objet O dans ce référentiel en coordonnées sphériques par rapport au point M. On a représenté sur la figure 1c la conversion des coordonnées du point O dans le référentiel sphérique centré sur le point M.

Les coordonnées sphériques de l'objet O comprennent deux valeurs d'angles $\alpha$ et $\beta$ et une valeur de distance.

Selon l'exemple qui précède dans lequel le référentiel de l'optique de détection 11 est un référentiel orthonormé, en notant $x_M$, $y_M$ et $z_M$ les coordonnées du point concourant M dans le référentiel de l'optique de détection 11, les coordonnées $\alpha_i$ et $\beta_i$ de l'objet O s'écrivent comme suit :

$$\alpha_i = \tan^{-1}\left(\frac{x_i - x_M}{z_i - z_M}\right)$$

$$\beta_i = \cos^{-1}\left(\frac{y_i - y_M}{\|O - M\|}\right)$$

Où $\|O - M\|$ est la distance entre le point O et le point M, notée $\rho$ dans la suite.

*Procédé de calibration*

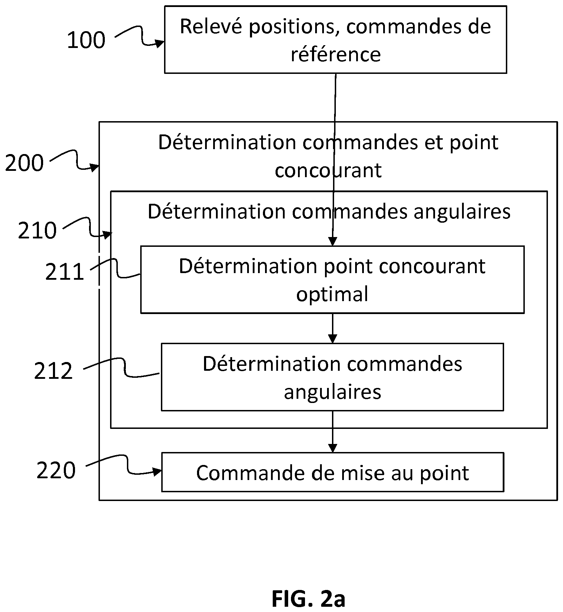

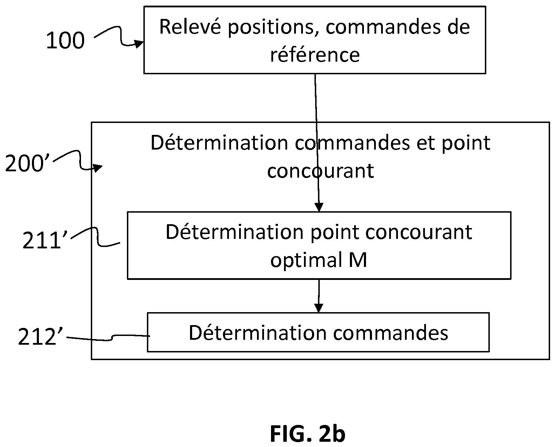

Le procédé de calibration, dont les principales étapes sont représentées sur les figures 2a et 2b, comprend la détermination d'une loi de commande $\{C_y, C_p, C_d\}$ à appliquer au viseur pour viser un objet O, et la détermination de la position du point concourant des lignes de visées M.

Ce procédé est mis en oeuvre par le système de visée 1, en particulier l'étape 200 est mise en oeuvre pas les moyens de traitement de l'unité de traitement, par exécution d'un programme approprié.

La loi de commande comprend deux commandes angulaires $C_y$, $C_p$, ces commandes étant des commandes de rotation du viseur respectivement en lacet et en tangage à appliquer au viseur pour être orienté vers l'objet O.

Les deux commandes angulaires sont déterminées en fonction de la position de l'objet O à viser par rapport au point M. Elles sont donc fonction des angles $\alpha$ et $\beta$ : $C_y(\alpha,\beta)$, $C_p(\alpha, \beta)$, $\alpha$ et $\beta$ dépendant eux-mêmes de la position du point M.

La loi de commande comprend également une commande de mise au point $C_d(\rho)$ du viseur en fonction de la distance $\rho$ entre le point concourant des lignes de visée M et l'objet O, $\rho$ dépendant elle-même de la position du point M.

On note la loi de commande $C=\{C_y(\alpha,\beta), C_p(\alpha, \beta), C_d(\rho)\}$

Le procédé comprend une première étape d'acquisition 100 de n positions de référence d'objets visés et des commandes correspondantes à appliquer au viseur pour viser les positions, n étant un entier supérieur ou égal à 6. On nomme $P_i$ les positions de référence acquises lors de cette étape, $C_{yi}$, $C_{pi}$ les commandes angulaires correspondantes et $C_{di}$ les commandes de mise au point correspondantes.

Cette étape 100 est avantageusement mise en oeuvre au moyen d'une mire équipée de plusieurs codes-barres, et positionnée en au moins deux positions différentes.

Le viseur 10 peut être commandé manuellement pour être positionné de façon à successivement acquérir une image nette de chacun des codes-barres de la mire (ceci correspond à la fois à une précision de visée et une précision de mise au point).

Alternativement, le viseur peut acquérir des images de la mire sans être piloté pour viser spécifiquement un code-barres, et la position visée est déterminée a *posteriori* en fonction de ce qui apparaît sur l'image, avantageusement par lecture d'un code-barres apparaissant sur l'image.

Avantageusement, la mire comprend au moins dix, voire vingt codes-barres, qui correspondent à autant de positions $P_i$, et la mire est elle-même positionnée en plusieurs endroits par rapport au viseur pour multiplier le nombre de positions $P_i$.

Chaque position $P_i$ est acquise dans le référentiel de l'optique de détection 11.

Une fois un code-barres de la mire correctement visé, on relève les commandes angulaires $C_{yi}$, $C_{pi}$ et de mise au point $C_{di}$ correspondantes du viseur 10.

Puis le procédé comprend une étape 200 de détermination de la position du point concourant M et des commandes $C_y$, $C_p$, $C_d$ composant la loi de commande.

Cette étape est mise en oeuvre en déterminant le minimum d'une fonction de la dérivée seconde de la loi de commande. De cette manière les commandes obtenues sont les moins chaotiques pour une position de l'objet O fixée, donc les plus robustes en cas d'imprécision sur la mesure de la position de l'objet O.

La fonction à minimiser, que l'on peut nommer énergie de déformation de la loi de commande, est l'intégrale de la somme des dérivées secondes des commandes composant la loi de commande.

Elle s'écrit comme suit :

$$f = \iint \left\|\frac{d^2C_y}{d\alpha^2}\right\|^2 + 2\left\|\frac{d^2C_y}{d\alpha d\beta}\right\|^2 + \left\|\frac{d^2C_y}{d\beta^2}\right\|^2 d\alpha d\beta$$

$$+ \iint \left\|\frac{d^2C_p}{d\alpha^2}\right\|^2 + 2\left\|\frac{d^2C_p}{d\alpha d\beta}\right\|^2 + \left\|\frac{d^2C_p}{d\beta^2}\right\|^2 d\alpha d\beta + k\int \left\|\frac{d^2C_d}{d\rho^2}\right\|^2 d\rho$$

Où k est une constante prédéterminée de pondération, par exemple égale à 1.

Selon un premier mode de réalisation représenté en figure 2a, cette étape est mise en oeuvre en déterminant d'abord, au cours d'une sous-étape 210, les commandes angulaires $C_y$, $C_p$, puis dans un deuxième temps la commande de mise au point $C_d$.

Cette étape 210 est mise en oeuvre en déterminant de manière itérative 211 la position optimale du point M correspondant aux commandes $C_y$, $C_p$ minimisant la fonction f, puis en déterminant 212 les commandes angulaires minimisant ladite fonction une fois le point M déterminé à l'issue de l'étape 211.

L'étape 211 de détermination de la position optimale du point M peut être mise en oeuvre de différentes manières.

Selon une première possibilité, on note f* le terme de f correspondant uniquement aux commandes angulaires (f privé de son terme fonction de la commande de mise au point $C_d$).

$$f^* = \iint \left\|\frac{d^2 C_y}{d\alpha^2}\right\|^2 + 2\left\|\frac{d^2 C_y}{d\alpha d\beta}\right\|^2 + \left\|\frac{d^2 C_y}{d\beta^2}\right\|^2 d\alpha d\beta + \iint \left\|\frac{d^2 C_p}{d\alpha^2}\right\|^2 + 2\left\|\frac{d^2 C_p}{d\alpha d\beta}\right\|^2 + \left\|\frac{d^2 C_p}{d\beta^2}\right\|^2 d\alpha d\beta$$

Etant donné f* on sait déterminer $argmin_{C_y, C_p}(f^*(M, C_y, C_p))$ à M fixé (l'obtention des commandes minimisant f* est décrite ci-après à l'étape 212, qui décrit cette étape pour le cas particulier du M optimal), c'est-à-dire que l'on sait calculer les fonctions $C_y$ et $C_p$ minimisant la fonction f*.

On note F* la fonction de $R^3$ dans R définie comme suit :

$$F^*(M) = min_{C_y, C_p}\left(f^*(M, C_y, C_p)\right)$$

L'étape 211 de détermination de la position optimale du point M est une étape de minimisation de la fonction F* (resp. G*). Cette étape peut être mise en oeuvre par descente de gradient.

Elle est mise en oeuvre de manière itérative comme suit :

- Détermination d'une position du point M,
- Calcul de $C_y$, $C_p$ minimisant f* à M fixé,
- Ajustement itératif de la valeur du point M pour déterminer de nouveaux $C_y$, $C_p$ minimisant f*.

Selon une seconde possibilité, il est possible d'inverser le calcul en exprimant les angles $\alpha$ et $\beta$ en fonction des commandes $C_y$, $C_p$ et non l'inverse. On obtient la fonction g* telle que :

$$g^* = \iint \left\|\frac{d^2\alpha}{dC_y^2}\right\|^2 + 2\left\|\frac{d^2\alpha}{dC_y dC_p}\right\|^2 + \left\|\frac{d^2\alpha}{dC_p^2}\right\|^2 dC_y dC_p$$

$$+ \iint \left\|\frac{d^2\beta}{dC_y^2}\right\|^2 + 2\left\|\frac{d^2\beta}{dC_y dC_p}\right\|^2 + \left\|\frac{d^2\beta}{dC_p^2}\right\|^2 dC_y dC_p$$

Dans ce cas, l'étape 211 comprend la détermination de la position du point M minimisant la fonction G*, définie de $R^3$ dans R comme suit :

$$G^*(M) = min_{\alpha, \beta}\left(g^*(M, \alpha, \beta)\right)$$

Cette étape est mise en oeuvre itérativement en calculant, par exemple par descente de gradient, en calculant, pour chaque position du point M, les angles $\alpha$ et $\beta$ exprimés en fonction des commandes $C_y$, $C_p$ minimisant la fonction g*, puis en ajustant la position du point M.

A l'issue de l'étape 211, quelle que soit la variante mise en oeuvre, on obtient donc une position optimale du point M.

Il est ensuite possible de déterminer au cours d'une étape 212 les commandes angulaires $C_y$, $C_p$ minimisant f* pour cette position du point M.

La minimisation de ce terme est réalisée en tenant compte des contraintes qui résultent de l'étape 100, selon lesquelles :

$$C_y\left(\alpha(P_i - M), \beta(P_i - M)\right) = C_{y_i}$$

$$C_p(\alpha(P_i - M), \beta(P_i - M)) = C_{p_i}$$

pour i=1,..,n où n est le nombre de positions de référence relevées lors de l'étape 100.

D'après l'article de F. L. Bookstein, Principal Warps : Thin-Plate Splines and the Decomposition of Deformations, IEEE Transactions on Pattern Analysis and Machine Intelligence Vol. 11, No 6, de Juin 1989, les commandes angulaires minimisant la fonction f* à M fixé sont du type spline de plaque mince (en anglais TPS ou Thin-Plate Spline).

La commande angulaire $C_y$ (resp. $C_p$) s'écrit comme suit :

$$C_y(\alpha, \beta) = a_1 + a_\alpha \alpha + a_\beta \beta + \sum_{i=1}^{n} w_i U\big(\big|(\alpha(P_i - M), \beta(P_i - M)) - (\alpha, \beta)\big|\big)$$

Avec :

$$U(r) = r^2 \log(r^2)$$

Les points $P_i$ correspondent aux n points obtenus à l'étape 100, et auxquels correspondent des valeurs d'angles $\alpha_i$, $\beta_i$ respectives. Le fait d'avoir au moins 6 points $P_i$ permet d'obtenir au moins autant de points connus que de degrés de libertés (3 degrés de liberté pour $a_1$, $a_\alpha$ et $a_\beta$ et trois autres pour la position du point M).

On définit les matrices :

$$K$$
$$= \begin{bmatrix} 0 & U(|(\alpha_1,\beta_1) - (\alpha_2,\beta_2)|) & \cdots & U(|(\alpha_1,\beta_1) - (\alpha_n,\beta_n)|) \\ U(|(\alpha_2,\beta_2) - (\alpha_1,\beta_1)|) & 0 & \cdots & U(|(\alpha_2,\beta_2) - (\alpha_n,\beta_n)|) \\ \cdots & \cdots & \cdots & \cdots \\ U(|(\alpha_n,\beta_n) - (\alpha_1,\beta_1)|) & U(|(\alpha_n,\beta_n) - (\alpha_2,\beta_2)|) & \cdots & 0 \end{bmatrix}, n$$

$\times n$

où $|P_i - P_j|$ est la distance entre les points $P_i$ et $P_j$,

$$Q = \begin{bmatrix} 1 & \alpha_1 & \beta_1 \\ 1 & \alpha_2 & \beta_2 \\ \cdots & \cdots & \cdots \\ 1 & \alpha_n & \beta_n \end{bmatrix}, n \times 3$$

et

$$L = \begin{bmatrix} K & Q \\ Q^T & O \end{bmatrix}, (n+3) \times (n+3)$$

Où $Q^T$ est la transposée de Q et O est une matrice nulle 3x3.

Soit $V = (v_1,...,v_n)$ un vecteur de longueur n correspondant aux commandes $C_{yi}$ (resp. $C_{pi}$) acquises lors de l'étape 100, et $Y = (V|0\ 0\ 0)$ un vecteur colonne de dimension n. Le vecteur $W = (w_1,...,w_n)$ et les coefficients $a_1$, $a_\alpha$, et $a_\beta$ sont fournis par l'équation :

$$L^{-1}Y = (W|a_1 \quad a_\alpha \quad a_\beta)^T.$$

Avantageusement, mais facultativement les commandes angulaires $C_y$, $C_p$ peuvent être des fonctions de type spline de plaque mince régularisées, telles que décrites dans La publication de G. Donato et S. Belongie, Approximate Thin Plate Spline Mappings, Computer Vision - ECCV 2002, Springer Berlin Heldelberg, 2002, 21-31.

L'utilisation de splines régularisées permet de relâcher la contrainte sur les commandes angulaires au niveau des points de référence $P_i$ visés lors de l'étape 100 (les commandes obtenues ne prennent pas exactement les valeurs $C_{yi}$ et $C_{pi}$ si l'objet se trouve à la position $P_i$) et ainsi de tenir compte du bruit éventuel de mesure. Ceci permet d'obtenir une loi de commande plus robuste.

En pratique, selon un mode de réalisation avantageux, lors de l'étape 100, les commandes $C_y$ et $C_p$ ne sont pas les commandes minimisant exactement la fonction f*, mais approchant le minimum. La fonction minimisée n'est donc pas f* mais une fonction $f_r$ définie comme la somme de f* et d'erreurs résiduelles :

$$f_r = f^* + \lambda \sum \left(C_y\big(\alpha(P_i - M), \beta(P_i - M)\big) - C_{y_i}\right)^2 + \left(C_p\big(\alpha(P_i - M), \beta(P_i - M)\big) - C_{p_i}\right)^2$$

où $\lambda$ est une constante pré-déterminée, par exemple égale à 1

Les expressions de $C_y$ et $C_p$ obtenues lors de la minimisation de la fonction $f_r$ sont identiques à celles obtenues pour la minimisation de f*, mais avec des valeurs différentes pour les $a_1$, $a_\alpha$ et $a_\beta$ et les $w_i$.

De retour à la figure 2a, le procédé comprend également une étape 220 de détermination de la commande de mise au point $C_d$.

Cette étape comprend la minimisation de la fonction f comprenant le terme lié à la commande de mise au point, noté $f_d$ ($f = f^* + f_d$) en ayant M, $C_y$ et $C_p$ fixés. En variante, on ne minimise que le terme $f_d$ lié à la commande de mise au point, cette variante étant équivalente car f* ne dépend pas de la commande $C_d$ de mise au point. Le document de D. Eberly, *Thin-Plate Splines,* Geometric Tools LLC, sur le site www.geometrictools.com enseigne la solution à la minimisation de la fonction $f_d$. La commande de mise au point $C_d$ obtenue est une spline cubique, qui s'écrit comme suit :

$$Cd = a_1 + a_\rho \rho + \sum_{i=1}^{n} w_i U_{1D}(|\rho - \rho(P_i - M)|)$$

avec $U_{1D}(r) = r^3$, et la contrainte qui résulte de l'étape 100, selon laquelle :

$$C_d(\rho(P_i - M)) = C_{d_i}$$

Les calculs des coefficients $a_1$, $a_\rho$ et $w_i$ se fait de façon analogue à la description qui précède concernant le calcul de splines de plaques minces régularisées : définition des matrices K, Q et L et obtention des coefficients à partir de la matrice L et d'un vecteur V comprenant les commandes de mises au point $Cd_i$ correspondant aux positions connues $P_i$.

Selon un mode de réalisation alternatif représenté en figure 2b, au cours de l'étape 200, les commandes angulaires et de mise au point sont calculées simultanément.

Dans ce cas on note 200' l'étape de détermination de la commande, cette étape étant également une étape itérative comprenant la mise en oeuvre, successivement, d'une première sous-étape 211' dans laquelle la position optimale du point M est déterminée, en déterminant les commandes $C_y$, $C_p$, $C_d$ minimisant la fonction f à chaque M fixé, et d'une deuxième sous-étape 212' au cours de laquelle les commandes $C_y$, $C_p$ et $C_d$ sont déterminées au point M optimal fixé résultant de l'étape 211'.

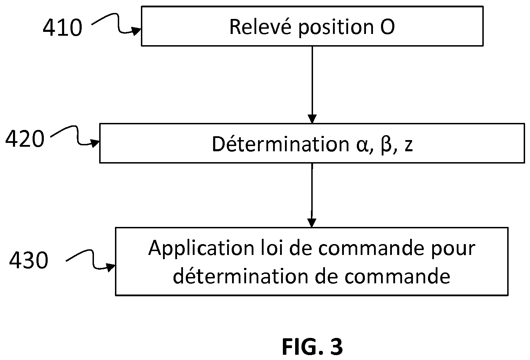

Une fois la loi de commande déterminée, le système de visée est utilisé comme suit, et comme illustré en figure 3 :

- La position d'un objet O dans le référentiel de l'optique de détection 11 est déterminée au cours d'une étape 410.
- A partir de la position de l'objet O et de la position du point M, déterminée lors du procédé de calibration, on en déduit 420 les valeurs des angles $\alpha$ et $\beta$ et de la distance d entre l'objet O et le point M.
- Puis, la loi de commande déterminée lors du procédé de calibration permet d'en déduire 430 les commandes à appliquer au moteur et au viseur pour viser précisément l'objet O.

Le procédé proposé présente l'avantage de pouvoir être mis en oeuvre sur tout système de visée sans connaissance a priori de son modèle cinématique. Il n'induit donc pas de contraintes sur la conception ou l'utilisation du système.

Le procédé présente une application préférée dans le cadre de l'acquisition d'images d'iris à distance. Dans ce cas, le système de visée 1 comprend, comme viseur 10, une caméra mobile à champ étroit et à haute résolution, par exemple une résolution de l'ordre de 200 dpi à un mètre.

L'optique de détection 11 comprend deux caméras fixes à résolution relativement plus basse que le viseur, par exemple de l'ordre de 30 dpi à un mètre, et à champ relativement plus large que le viseur, afin de pouvoir repérer dans une scène un iris d'un individu dont on souhaite acquérir une image.

La position de l'iris est acquise par l'optique de détection et communiquée au viseur qui, ayant été calibré grâce au procédé décrit ci-avant, peut se positionner pour viser avec précision l'iris et en acquérir une image.

Ce procédé permet aussi de viser un objet tel qu'un iris dans une scène même si sa position n'est pas connue a priori. Ceci est donc moins contraignant pour les utilisateurs dont l'image d'iris est acquise car ainsi ils n'ont pas à se positionner de façon particulière ou à un endroit précis pour qu'une image de leur iris puisse être acquise.

Le procédé n'est néanmoins pas limité au domaine de l'acquisition d'images de traits biométriques mais est applicable à n'importe quel objet que l'on souhaite viser par un système de visée.

## Revendications

1. Procédé de calibration d'un système d'acquisition d'images de traits biométriques d'individus, ledit système comprenant un viseur (10) et une optique de détection (11) de la position d'un objet (O) dans l'espace, **caractérisé en ce que** ledit procédé de calibration comprend la détermination d'une loi de commande à appliquer au viseur (10) pour viser l'objet (O) en fonction de sa position, ladite position étant déterminée dans un référentiel de l'optique de détection (11) et la loi de commande comprenant deux commandes angulaires ($C_y$, $C_p$) et une commande de mise au point (Cd) du viseur (10), exprimées en fonction des positions relatives entre l'objet à viser (O) et un point concourant (M) de toutes les lignes de visée du viseur (10),
le procédé de calibration comprenant les étapes consistant à :

   - viser (100), avec le viseur (10) des objets se trouvant à au moins six positions de référence ($P_i$) différentes connues dans le référentiel de l'optique de détection (11) et relever les commandes correspondantes ($C_{yi}$, $C_{pi}$, $C_{di}$) pour chaque position de référence,
   - à partir des positions de référence ($P_i$) et des commandes correspondantes ($C_{yi}$, $C_{pi}$, $C_{di}$) pour chaque position de référence, déterminer (200, 200') la position du point concourant (M) des lignes de visées et la loi de commande ($C_y$, $C_p$) par la minimisation d'une fonction de la dérivée seconde de la loi de commande en prenant en compte comme contraintes les commandes ($C_{yi}$, $C_{pi}$, $C_{di}$), relevées pour les différents points ($P_i$) visés.

2. Procédé de calibration d'un système d'acquisition d'images de traits biométriques d'individus selon la revendication 1, dans lequel l'étape de détermination (200, 200') de la position du point concourant (M) et de la loi de commande comprend la mise en oeuvre des étapes consistant à :

   - déterminer (211, 211') une position du point concourant (M) correspondant à des commandes ($C_y$, $C_p$, $C_d$) minimisant la fonction de la dérivée seconde de la loi de commande, et
   - une fois la position du point concourant (M) déterminée, déterminer (212, 212') les commandes ($C_y$, $C_p$, $C_d$) minimisant la fonction de la dérivée seconde de la loi de commande.

3. Procédé de calibration selon la revendication 2, dans lequel l'étape de détermination de la position (211, 211') du point concourant (M) comprend la minimisation, en fonction de ladite position, de l'intégrale de la somme des dérivées secondes des commandes angulaires ($C_y$, $C_p$).

4. Procédé de calibration selon la revendication 2, dans lequel l'étape de détermination de la position (211, 211') du point concourant (M) comprend la minimisation, en fonction de ladite position, de l'intégrale de la somme des dérivées secondes des positions angulaires relatives entre le point à viser (O) et le point concourant (M) exprimées en fonction des commandes angulaires du viseur ($\alpha(C_y, C_p)$, $\beta(C_y, C_p)$).

5. Procédé de calibration selon l'une des revendications précédentes, dans lequel chaque commande angulaire ($C_y$, $C_p$) est une fonction de deux angles ($\alpha$, $\beta$) de type spline de plaque mince.

6. Procédé de calibration selon la revendication 5, dans lequel chaque commande angulaire ($C_y$, $C_p$) est une fonction de deux angles ($\alpha$, $\beta$) du type spline de plaque mince régularisée.

7. Procédé de calibration selon l'une des revendications 2 à 6, dans lequel la détermination de la commande de mise au point est mise en oeuvre lors de la détermination des commandes angulaires ($C_y$, $C_p$) ou postérieurement à la détermination des commandes angulaires et du point M..

**8.** Procédé de calibration selon la revendication 7, dans lequel la détermination de la commande de mise au point (220, 211') comprend la minimisation de l'intégrale de la dérivée seconde de la commande de mise au point.

**9.** Procédé de calibration selon l'une des revendications précédentes, dans lequel la commande de mise au point ($C_d$) est une fonction de type spline cubique.

**10.** Système d'acquisition d'images de traits biométriques d'individus (1), comprenant un viseur (10), une optique de détection (11) d'une position d'un objet à viser, et une unité de traitement (12) comportant des moyens de traitement, le système d'acquisition d'images de traits biométriques d'individus (1) étant **caractérisé en ce qu'**il est adapté pour mettre en oeuvre le procédé selon l'une des revendications qui précèdent.

**11.** Utilisation d'un système d'acquisition d'images de traits biométriques d'individus (1) selon la revendication qui précède, comprenant les étapes consistant à :

- acquérir (410) une position d'un objet (O) à viser dans un référentiel de l'optique de détection,
- déduire (420) des positions relatives entre l'objet (O) et un point concourant (M) des lignes de visée du viseur (10), des coordonnées de l'objet (0) dans un référentiel sphérique centré sur le point concourant (M), et
- à partir de la loi de commande déterminée lors du procédé de calibration selon l'une des revendications 1 à 9, en déduire (430) une commande à appliquer au viseur (10) pour viser l'objet.

**Patentansprüche**

**1.** Kalibrierungsverfahren eines Erfassungssystems von Bildern von biometrischen Linien von Individuen, wobei das System ein Visier (10) und eine Detektionsoptik (11) der Position eines Objekts (O) im Raum umfasst, **dadurch gekennzeichnet, dass** das Kalibrierungsverfahren das Bestimmen eines auf das Visier (10) anzuwendenden Steuerungsgesetzes umfasst, um das Objekt (O) in Abhängigkeit von seiner Position anzuvisieren, wobei die Position in einem Bezugssystem der Detektionsoptik (11) bestimmt ist und das Steuerungsgesetz zwei Winkelbefehle ($C_y$, $C_p$) und einen Fokussierungsbefehl (Cd) des Visiers (10) umfasst, ausgedrückt in Abhängigkeit von den relativen Positionen zwischen dem anzuvisierenden Objekt (O) und einem konvergierenden Punkt (M) aller Ziellinien des Visiers (10),
wobei das Kalibrierungsverfahren die Schritte umfasst, die darin bestehen:

- Anvisieren (100), mit dem Visier (10), der Objekte, die sich an mindestens sechs bekannten unterschiedlichen Referenzpositionen ($P_i$) in dem Bezugssystem der Detektionsoptik (11) befinden und Ermitteln der entsprechenden Befehle ($C_{yi}$, $C_{pi}$, $C_{di}$) für jede Referenzposition,
- ausgehend von den Referenzpositionen ($P_i$) und den entsprechenden Befehlen ($C_{yi}$, $C_{pi}$, $C_{di}$) für jede Referenzposition, Bestimmen (200, 200') der Position des konvergierenden Punkts (M) der Ziellinien und des Steuerungsgesetzes ($C_y$, $C_p$) durch Minimieren einer Funktion der zweiten Ableitung des Steuerungsgesetzes durch Berücksichtigung als Bedingungen der für die verschiedenen anvisierten Punkte ($P_i$) ermittelten Befehle ($C_{yi}$, $C_{pi}$, $C_{di}$) .

**2.** Kalibrierungsverfahren eines Erfassungssystems von Bildern von biometrischen Linien von Individuen nach Anspruch 1, wobei der Schritt des Bestimmens (200, 200') der Position des konvergierenden Punkts (M) und des Steuerungsgesetzes die Durchführung der Schritte umfasst, die darin bestehen:

- Bestimmen (211, 211') einer Position des konvergierenden Punkts (M), die Befehlen ($C_y$, $C_p$, $C_d$) entspricht, welche die Funktion der zweiten Ableitung des Steuerungsgesetzes minimieren, und
- sobald die Position des konvergierenden Punkts (M) bestimmt ist, Bestimmen (212, 212') der Befehle ($C_y$, $C_p$, $C_d$), welche die Funktion der zweiten Ableitung des Steuerungsgesetzes minimieren.

**3.** Kalibrierungsverfahren nach Anspruch 2, wobei der Schritt des Bestimmens der Position (211, 211') des konvergierenden Punkts (M) das Minimieren, in Abhängigkeit von der Position, des Integrals der Summe der zweiten Ableitungen der Winkelbefehle ($C_y$, $C_p$) umfasst.

**4.** Kalibrierungsverfahren nach Anspruch 2, wobei der Schritt des Bestimmens der Position (211, 211') des konvergierenden Punkts (M) das Minimieren, in Abhängigkeit von der Position, des Integrals der Summe der zweiten Ableitungen der relativen Winkelpositionen zwischen dem anzuvisierenden Punkt (O) und dem konvergierenden Punkt (M), ausgedrückt in Abhängigkeit der Winkelbefehle des Visiers ($\alpha$($C_y$, $C_p$), $\beta$($C_y$, $C_p$)), umfasst.

5. Kalibrierungsverfahren nach eine der vorangehenden Ansprüche, wobei jeder Winkelbefehl ($C_y$, $C_p$) eine Funktion von zwei Winkeln ($\alpha$, $\beta$) vom Typ Thin-Plate-Spline ist.

6. Kalibrierungsverfahren nach Anspruch 5, wobei jeder Winkelbefehl ($C_y$, $C_p$) eine Funktion von zwei Winkeln ($\alpha$, $\beta$) vom Typ regularisierter Thin-Plate-Spline ist.

7. Kalibrierungsverfahren nach einem der Ansprüche 2 bis 6, wobei das Bestimmen des Fokussierungsbefehls beim Bestimmen der Winkelbefehle ($C_y$, $C_p$) oder nach dem Bestimmen der Winkelbefehle und des Punkts M durchgeführt wird.

8. Kalibrierungsverfahren nach Anspruch 7, wobei das Bestimmen des Fokussierungsbefehls (220, 211') das Minimieren des Integrals der zweiten Ableitung des Fokussierungsbefehls umfasst.

9. Kalibrierungsverfahren nach eine der vorangehenden Ansprüche, wobei der Fokussierungsbefehl ($C_d$) eine Funktion vom Typ kubischer Spline ist.

10. Erfassungssystem von Bildern von biometrischen Linien von Individuen (1), umfassend ein Visier (10), eine Detektionsoptik (11) einer Position eines anzuvisierenden Objekts und eine Verarbeitungseinheit (12), aufweisend Verarbeitungsmittel, wobei das Erfassungssystems von Bildern von biometrischen Linien von Individuen (1) **dadurch gekennzeichnet ist, dass** es für die Durchführung des Verfahrens nach einem der vorangehenden Ansprüche geeignet ist.

11. Verwendung eines Erfassungssystems von Bildern von biometrischen Linien von Individuen (1) nach vorangehendem Anspruch, umfassend die Schritte, die darin bestehen:

- Erfassen (410) einer Position eines anzuvisierenden Objekts (O) in einem Bezugssystem der Detektionsoptik,
- Ableiten (420) aus den relativen Positionen zwischen dem Objekt (O) und einem konvergierenden Punkt (M) der Ziellinien des Visiers (10) der Koordinaten des Objekts (O) in einem auf den konvergierenden Punkt (M) zentrierten sphärischen Bezugssystem, und
- ausgehend von dem beim Kalibrierungsverfahren nach einem der Ansprüche 1 bis 9 bestimmten Steuerungsgesetzes, Ableiten (430) daraus eines auf das Visier (10) anzuwendenden Befehls, um das Objekt anzuvisieren.

**Claims**

1. A method for calibrating a system for acquiring images of biometric features of individuals, said system comprising a viewfinder (10) and an optics (11) for detecting the position of an object (O) in space, **characterized in that** said calibration method comprises the determination of a control law to be applied to the viewfinder (10) to sight the object (O) depending on its position, said position being determined in a reference frame of the detection optics (11) and the control law comprising two angular controls ($C_y$, $C_p$) and a focus control (Cd) of the viewfinder (10), expressed as a function of the relative positions between the object to be sighted (O) and a concurrent point (M) of all lines of sight of the viewfinder (10),
the calibration method comprising the steps consisting of:

- sighting (100), with the viewfinder (10), objects located at least at six different reference positions ($P_i$) known in the reference frame of the detection optics (11) and noting the corresponding controls ($C_{yi}$, $C_{pi}$, $C_{di}$) for each reference position,
- from the reference positions ($P_i$) and the corresponding controls ($C_{yi}$, $C_{pi}$, $C_{di}$) for each reference position, determining (200, 200') the position of the concurrent point (M) of the lines of sight and the control law ($C_y$, $C_p$) by minimizing a function of the second derivative of the control law by taking into account, as constraints, the controls ($C_{yi}$, $C_{pi}$, $C_{di}$), noted for the various sighted points ($P_i$).

2. The method for calibrating a system for acquiring images of biometric features of individuals according to claim 1, wherein the step of determining (200, 200') the position of the concurrent point (M) and the control law comprises the implementation of the steps consisting of:

- determining (211, 211') a position of the concurrent point (M) corresponding to controls ($C_y$, $C_p$, $C_d$) minimizing the function of the second derivative of the control law, and
- once the position of the concurrent point (M) is determined, determining (212, 212') the controls ($C_y$, $C_p$, $C_d$) minimizing the function of the second derivative of the control law.

3. The calibration method according to claim 2, wherein the step of determining (211, 211') the position of the concurrent point (M) comprises the minimization, depending on said position, of the integral of the sum of the second derivatives of the angular controls ($C_y$, $C_p$).

4. The calibration method according to claim 2, wherein the step of determining (211, 211') the position of the concurrent point (M) comprises the minimization, depending on said position, of the integral of the sum of the second derivatives of the relative angular positions between the point to be sighted (O) and the concurrent point (M), expressed as a function of the angular controls of the viewfinder ($\alpha(C_y, C_p)$, $\beta(C_y, C_p)$).

5. The calibration method according to any of the preceding claims, wherein each angular control ($C_y$, $C_p$) is a function of two angles ($\alpha$, $\beta$) of the thin-plate spline type.

6. The calibration method according to claim 5, wherein each angular control ($C_y$, $C_p$) is a function of two angles ($\alpha$, $\beta$) of the regularized thin-plate spline type.

7. The calibration method according to any of claims 2 to 6, wherein the determination of the focus control is implemented when determining the angular controls ($C_y$, $C_p$) or subsequently to the determination of the angular controls and the point M.

8. The calibration method according to claim 7, wherein the determination of the focus control (220, 211') comprises the minimization of the integral of the second derivative of the focus control.

9. The calibration method according to any of the preceding claims, wherein the focus control ($C_d$) is a function of the cubic spline type.

10. A system (1) for acquiring images of biometric features of individuals, comprising a viewfinder (10), an optics (11) for detecting a position of an object to be sighted, and a processing unit (12) including processing means, the system (1) for acquiring images of biometric features of individuals being **characterized in that** it is adapted to implement the method according to any of the preceding claims.

11. A use of a system (1) for acquiring images of biometric features of individuals according to the preceding claim, comprising the steps consisting of:

- acquiring (410) a position of an object (O) to be sighted in a reference frame of the detection optics,
- deducing (420) relative positions between the object (O) and a concurrent point (M) of the lines of sight of the viewfinder (10), coordinates of the object (O) in a spherical reference frame centered on the concurrent point (M), and
- from the control law determined during the calibration method according to any of claims 1 to 9, deducing (430) therefrom a control to be applied to the viewfinder (10) to sight the object.

FIG. 1a

FIG. 1b

FIG. 1c

100 → Relevé positions, commandes de référence

200 → Détermination commandes et point concourant

210 → Détermination commandes angulaires

211 → Détermination point concourant optimal

212 → Détermination commandes angulaires

220 → Commande de mise au point

**FIG. 2a**

100 → Relevé positions, commandes de référence

200' → Détermination commandes et point concourant

211' → Détermination point concourant optimal M

212' → Détermination commandes

**FIG. 2b**

410    Relevé position O

420    Détermination α, β, z

430    Application loi de commande pour détermination de commande

**FIG. 3**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20100289869 A

**Littérature non-brevet citée dans la description**

- **JUNEJO, I.N ; FOROOSH, H.** Optimizing PTZ camera calibration from two images. *Machine Vision and Applications,* 2012, vol. 23 (2), 375-389
- **F. L. BOOKSTEIN.** Principal Warps : Thin-Plate Splines and the Decomposition of Deformations. *IEEE Transactions on Pattern Analysis and Machine Intelligence,* Juin 1989, vol. 11 (6
- **G. DONATO ; S. BELONGIE.** Approximate Thin Plate Spline Mappings, Computer Vision - ECCV 2002. Springer Berlin Heldelberg, 2002, 21-31